# NEUE EUROPÄISCHE PATENTSCHRIFT

(11) **EP 2 620 326 B2**
(45) Veröffentlichungstag und Bekanntmachung des Hinweises auf die Entscheidung über den Einspruch: **19.10.2022**
(45) Hinweis auf die Patenterteilung: 01.04.2015
(21) Anmeldenummer: 12194949.9
(22) Anmeldetag: 30.11.2012
(51) Int. Cl.: B60R 1/00

(54) **Verfahren und Vorrichtung zum Unterstützen eines Ankuppelns eines Anhängers**
Method and device for supporting a coupling procedure of a trailer
Procédé et dispositif d'assistance d'accouplement d'une remorque

(30) Priorität: 24.01.2012 DE 102012200946
(43) Veröffentlichungstag der Anmeldung: 31.07.2013
(73) Patentinhaber: Robert Bosch GmbH, 70442 Stuttgart (DE)
(72) Erfinder: Niemz, Volker, 71277 Rutesheim (DE)

(56) Entgegenhaltungen:
- EP-A1- 1 249 365
- EP-A1- 1 249 365
- EP-A1- 1 377 062
- EP-A1- 1 377 062
- EP-A2- 1 251 025
- DE-A1-102004 029 129
- DE-A1-102008 013 457
- DE-A1-102008 039 136
- DE-C1- 4 336 288
- GB-A- 2 447 672
- US-A1- 2009 271 078

## Beschreibung

### Stand der Technik

Die vorliegende Erfindung betrifft ein Verfahren und eine Vorrichtung zur Unterstützung eines Ankuppelns eines Anhängers an ein Fahrzeug.

In jüngster Zeit werden im Automobilsektor verstärkt Rückfahrsysteme angeboten, welche unter Verwendung von Kameras eine rückseitige Ansicht des Fahrzeugs bereitstellen. Dabei sind Systeme mit verschiedenen Ansichten bekannt, beispielsweise gibt es eine sogenannte Vogelperspektive, bei der das Fahrzeug und die Umgebung des Fahrzeugs von oben dargestellt werden. Ferner kann ein Fahrer bei Fahrzeugen mit Anhängerkupplung auch eine Ansicht direkt hinter der Anhängerkupplung wählen, um Rangiervorgänge in Verbindung mit der Anhängerkupplung zu vereinfachen. Üblicherweise wird die Ansicht der Anhängerkupplung über eine Bildtransformation einer Rückfahrkamera realisiert. Hierbei ist ein Problem dieser Transformation, dass nur das sehr nahe Umfeld um die Anhängerkupplung herum visualisiert werden kann, da alle weiter entfernten Objekte stark verzerrt dargestellt werden würden und somit dem Fahrer keine hilfreiche Abbildung des sonstigen rückwärtigen Bereichs hinter dem Fahrzeug geben würden. Üblicherweise wird dabei sehr stark auf die Anhängerkupplung gezoomt, um einen Ankupplungsvorgang möglichst gut zu unterstützen. Wenn allerdings eine Deichsel eines Anhängers noch nicht in dem die Anhängerkupplung zeigenden gezoomten Bildbereich vorhanden ist, hat der Fahrer das Problem des genauen Auffindens des Anhängers, da der gezeigte Bildbereich zu klein ist. Ferner zeigt die EP 1251025 A2 ein Verfahren nach dem Oberbegriff des Anspruches 1.

Daher wäre es wünschenswert, eine verbesserte Darstellung eines rückwärtigen Bereichs hinter einem Fahrzeug während eines Ankupplungsvorgangs eines Anhängers zu haben.

### Offenbarung der Erfindung

Das erfindungsgemäße Verfahren zum Unterstützen eines Ankuppelns eines Anhängers an ein Fahrzeug mit den Merkmalen des Anspruchs 1 weist dem gegenüber den Vorteil auf, dass eine automatische Umschaltung einer rückwärtigen Ansicht des Fahrzeugs von einer Darstellung eines Gesamtbereichs zu einer Darstellung eines Nahbereichs an der Anhängerkupplung möglich ist. Somit kann ein einfaches und sicheres Ankuppeln eines Anhängers ermöglicht werden, ohne dass ein Fahrer ständig manuell zwischen der Ansicht des Gesamtbereichs und der Ansicht der Anhängerkupplung umschalten muss. Dies wird erfindungsgemäß dadurch erreicht, dass die erste Ansicht des rückwärtigen Gesamtbereichs so lange angezeigt wird, solange ein Abstand zwischen dem Anhänger und der Anhängerkupplung größer als ein vorbestimmter Abstand ist. Wenn allerdings der Abstand kleiner als der vorbestimmte Abstand wird, schaltet ein Steuergerät die rückwärtige Ansicht automatisch um und zeigt einem Nutzer die zweite Ansicht eines Nahbereichs der Anhängerkupplung. Somit kann der Fahrer konstant einen Ankupplungsvorgang durchführen. Die erste und die zweite Ansicht werden mittels einer Kamera erfasst. Der Abstand zum Anhänger wird mittels einer separaten, zusätzlichen Objekterfassungseinrichtung exakt ermittelt. Der vorbestimmte Abstand ist derart gewählt, dass die Umschaltung von der ersten zur zweiten Ansicht erst dann erfolgt, wenn in der zweiten Ansicht des Nahbereichs der Anhängerkupplung auch das Objekt hinter dem Fahrzeug, d.h. der Anhänger bzw. dessen Deichsel, gezeigt wird. Dann ist es für den Fahrer sinnvoll, dass der Nahbereich der Anhängerkupplung angezeigt wird, um ein vorsichtiges weiteres Rangieren des Fahrzeugs in Richtung des Anhängers zu ermöglichen.

Die Unteransprüche zeigen bevorzugte Weiterbildungen der Erfindung.

Weiter bevorzugt muss das erfindungsgemäße Verfahren bewusst durch einen Fahrer aktiviert werden. Hierdurch kann die am Fahrzeug befindliche Kamera in mehreren Modi verwendet werden und insbesondere auch in einem gemäß der Erfindung beschriebenen Anhängerankupplungsmodus betrieben werden, bei dem eine automatische Umschaltung zwischen dem Gesamtbereich und dem Nahbereich der Anhängerkupplung erfolgt.

Die zusätzliche Objektverfassungseinrichtung erfasst einen exakten Abstand zu dem hinter dem Fahrzeug befindlichen Objekt, d.h. zur Deichsel des Anhängers. Zusätzlich kann dies mittels der Kamera erfolgen. Erfindugnsgemäß ist die Objekterfassungseinrichtung ein Ultraschallsensor. Der Ultraschallsensor kann dabei mittels Direktecho (gleichzeitiges Senden und Empfangen mit einem Sensor) oder mittels Kreuzecho (Senden und Empfangen durch unterschiedliche Sensoren) betrieben werden.

Weiter bevorzugt ist eine Steuereinrichtung derart ausgelegt, dass die von der Objekterfassungseinrichtung und optional der Kamera bei Erfassen eines Objekts hinter dem Fahrzeug übermittelten Signale dazu verwendet werden können, das erfasste Objekt genau zu bestimmten. Hierdurch kann eine zusätzliche Sicherheitsmaßnahme derart vorgesehen werden, dass beispielsweise wenn erkannt wird, dass das hinter dem Fahrzeug befindliche Objekt nicht eine Deichsel eines Anhängers ist, ein Warnsignal abgegeben wird.

Besonders bevorzugt werden die erste und zweite Ansicht nur mittels einer einzigen Kamera bereitgestellt.

Bei einer weiteren bevorzugten Ausgestaltung der Erfindung erfolgt eine Annäherung des Fahrzeugs automatisiert z.B. mittels einer konstanten, sehr geringen Geschwindigkeit.

Um unerwünschte Auffahrunfälle oder dergleichen zu vermeiden, werden vorzugsweise schnelle und/oder ruckartige Bewegungen des Fahrzeugs durch einen Eingriff in ein Motorsteuergerät verhindert.

Ferner betrifft die vorliegende Erfindung ein Steuergerät, welches ausgebildet ist, die Schritte gemäß dem erfindungsgemäßen Verfahren durchzuführen. Vorzugsweise umfasst das Steuergerät dabei eine Ausgabeeinheit, welche ausgelegt ist, eine erste rückwärtige Ansicht eines Gesamtbereichs hinter dem Fahrzeug und eine zweite rückwärtige Ansicht eines Nahbereichs einer Anhängerkupplung am Fahrzeug auszugeben. Dabei werden die erste und zweite Ansicht durch eine Kamera am Fahrzeug aufgenommen. Ferner umfasst das Steuergerät eine Auswerteeinheit, welche Signale einer Objekterfassungseinrichtung, die einen Bereich hinter dem Fahrzeug überwacht und/oder Signale der Kamera, auswertet, um einen Abstand zwischen dem Anhänger und dem Fahrzeug zu bestimmen. Darüber hinaus ist eine Umstelleinheit zum Umstellen der Ansichten der Kamera vorgesehen derart, dass die zweite rückwärtige Ansicht des Nahbereichs der Anhängerkupplung ausgegeben wird, wenn ein Abstand zwischen dem Fahrzeug und dem erfassten Objekt kleiner als ein vorbestimmter Abstand ist.

### Kurze Beschreibung der Zeichnung

Nachfolgend wird ein bevorzugtes Ausführungsbeispiel der Erfindung unter Bezugnahme auf die begleitende Zeichnung im Detail beschrieben. In der Zeichnung ist:

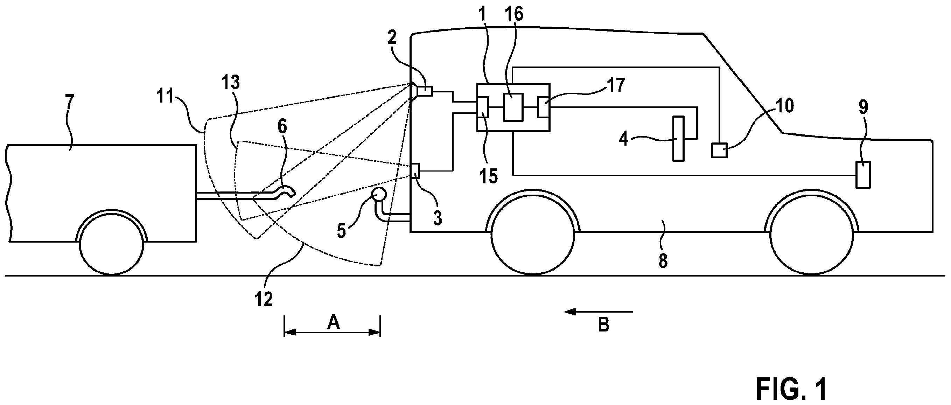

Figur 1 eine schematische Darstellung des Verfahrens und des Steuergeräts zur Unterstützung eines Ankuppelns eines Anhängers an ein Fahrzeug.

### Bevorzugte Ausführungsform der Erfindung

Fig. 1 zeigt in schematischer Darstellung ein Fahrzeug 8, welches mit dem erfindungsgemäßen Steuergerät 1 ausgestattet ist und in der Lage ist, das erfindungsgemäße Verfahren durchzuführen. Ein Anhänger 7 soll dabei über eine Deichsel 6 am Anhänger an eine Anhängerkupplung 5 am Fahrzeug 8 angehängt werden. Hierzu fährt das Fahrzeug 8 in Richtung des Pfeils B rückwärts auf den Anhänger 7 zu.

Das Steuergerät 1 umfasst eine Auswertungseinheit 15, eine Umschalteinheit 16 und eine Ausgabeeinheit 17. Das Steuergerät 1 ist über die Ausgabeeinheit 17 mit einer Anzeigeeinrichtung 4, beispielsweise einem Monitor oder dergleichen, verbunden. Ferner sind am Fahrzeug 8 eine Kamera 2 und ein Ultraschallsensor 3 angeordnet. Die Kamera 2 dient als optische Einrichtung zur optischen Erfassung eines Bereichs hinter dem Fahrzeug 8. Die Kamera 2 kann dabei eine erste Ansicht 11 erzeugen, welche einen Großbereich hinter dem Fahrzeug zeigt und eine zweite Ansicht 12 erzeugen, welche einen Nahbereich um die Anhängerkupplung 5 des Fahrzeugs herum zeigt. Der Ultraschallsensor 3 dient als Objekterfassungseinrichtung und detektiert in einem Ultraschall-Überwachungsbereich 13 eventuell vorhandene Objekte, z.B. den Anhänger 7 und bestimmt einen Abstand zu derartigen Objekten.

Am Fahrzeug 8 ist ferner ein Schalter 10 oder dergleichen vorgesehen, welcher die erfindungsgemäße Ankuppelunterstützung des Anhängers 7 aktiviert. Während des Rückwärtsfahrens wird zuerst über die Kamera 2 die erste Ansicht 11 des rückwärtigen Gesamtbereichs hinter dem Fahrzeug 8 auf der Ausgabeeinrichtung 4 dargestellt. Gleichzeitig mit der Kamera 2 wird auch der Ultraschallsensor 3 betrieben, welcher im rückwärtigen Bereich des Fahrzeugs Objekte erfassen soll. Bei der in Fig. 1 dargestellten Situation befindet sich die Deichsel 6 des Anhängers 7 schon im Ultraschall-Überwachungsbereich 13. Der Ultraschallsensor 3 überwacht dabei auch den Abstand der Deichsel 6 zum am weitesten rückwärtig angeordneten Teil des Fahrzeugs, was in diesem Ausführungsbeispiel die Anhängerkupplung 7 ist. Sobald ein Abstand A zwischen der Anhängerkupplung 5 und der Deichsel 6 unterschritten wird, schaltet das Steuergerät 1 die am Monitor dargestellte Ansicht von der ersten Ansicht 11 auf die zweite Ansicht 12 des Nahbereichs an der Anhängerkupplung um. Somit hat nun ein Fahrer genau sowohl die Anhängerkupplung als auch das freie Ende der Deichsel 6, welches sich ebenfalls im Bereich der zweiten Ansicht 12 befindet, im Blick.

Somit kann der Fahrer nach Aktivieren des Anhängerankupplungsmodus z.B. mittels des Schalters 10 ohne weiteres manuelles Umschalten oder dergleichen rückwärtsfahren. Die Kamera 2 zeigt zum Beginn des Rückwärtsfahrens die erste Ansicht 11 mit dem rückwärtigen Gesamtbereich hinter dem Fahrzeug und sobald der vorbestimmte Abstand A unterschritten wird, den Nahbereich an der Anhängerkupplung 5 (zweite Ansicht 12). Somit kann ein einfaches und kontinuierliches Rückwärtsfahren des Fahrzeugs in Richtung der Deichsel 6 des Anhängers 7 erfolgen. Somit kann erfindungsgemäß der Fahrer zuerst den Gesamtüberblick erhalten, wenn der Anhänger noch relativ weit vom Fahrzeug entfernt ist und sobald der Anhänger im Nahbereich des Fahrzeugs ist, kann dann eine genaue Darstellung der Anhängerkupplung und der sich langsam nähernden Deichsel ermöglicht werden.

Es sei angemerkt, dass das Steuergerät 1 zusätzlich auch noch mit einem Motorsteuergerät 9 verbunden sein kann, welches eine Motorleistung des Fahrzeugs steuert. Hierbei kann das Motorsteuergerät 9 über das Steuergerät 1 derart angesteuert werden, dass bei Einschalten des Anhängerankupplungsmodus ein Eingriff in das Motormanagement derart erfolgt, dass ruckartige und schnelle Beschleunigungen verhindert werden, um eine unerwünschte Kollision mit dem Anhänger zu verhindern.

Weiter sei angemerkt, dass erfindungsgemäß anhand des mittels des Ultraschallsensors 3 aufgenommenen Ultraschallmusters eine Erkennung der Deichsel 6 erfolgt. Dies ist beispielsweise dann hilfreich, wenn unbeabsichtigt noch ein weiterer Gegenstand zwischen der Anhängerkupplung 5 und der Deichsel 6 vorhanden ist und die Objekterkennung mittels des Ultraschallsensors 3 erfasst, dass das zwischen dem Fahrzeug und dem Anhänger befindliche Objekt nicht die Form einer Deichsel hat. Dann kann beispielsweise ein Warnton oder ein automatischer Bremsvorgang oder dergleichen ausgeführt werden.

Ferner ist es möglich, dass sobald der Abstand zwischen dem Fahrzeug und der Deichsel 6 kleiner als der vorbestimmte Abstand A ist, über eine entsprechende Trajektorenplanung und eine Lenkansteuerung eine automatische Annäherung des Fahrzeugs ohne Eingreifen des Fahrers an die Deichsel erfolgen kann.

## Patentansprüche

1. Verfahren zum Unterstützen eines Ankuppelns einer Deichsel (6) des Anhängers (7) an eine Anhängerkupplung (5) eines Fahrzeug (8) mittels einer Kamera (2), welche in einer ersten Ansicht (11) einen rückwärtigen Gesamtbereich hinter dem Fahrzeug (8) erfasst und in einer zweiten Ansicht (12) einen Nahbereich um die Anhängerkupplung (5) des Fahrzeugs erfasst,
- wobei die erste Ansicht (11) des rückwärtigen Gesamtbereichs angezeigt wird, solange ein Abstand zwischen der Deichsel (6) und der Anhängerkupplung (5) größer als ein vorbestimmter Abstand (A) ist, und
- wobei die zweite Ansicht des Nahbereichs der Anhängerkupplung (5) angezeigt wird, wenn ein Abstand zwischen der Deichsel (6) und der Anhängerkupplung (5) kleiner als der vorbestimmte Abstand (A) ist,
**dadurch gekennzeichnet,**
- **dass** der vorbestimmte Abstand (A) derart gewählt ist, dass die Umschaltung von der ersten Ansicht (11) zur zweiten Ansicht (12) erst dann erfolgt, wenn in der zweiten Ansicht (12) auch die Deichsel (6) des Anhängers (7) hinter dem Fahrzeug erfasst wird,
- wobei eine Objekterfassungseinrichtung (3) den Abstand zwischen der Deichsel (6) und der Anhängerkupplung (5) mittels Ultraschall erfasst sowie mittels eines aufgenommenen Ultraschallmusters die Deichsel (6) erkennt.

2. Verfahren nach Anspruch 1, **dadurch gekennzeichnet, dass** das Verfahren erst nach Aktivierung durch den Fahrer insbesondere mittels eines Schalters (10) oder dergleichen, ausgeführt wird.

3. Verfahren nach einem der vorhergehenden Ansprüche, **dadurch gekennzeichnet, dass** die ersten Ansicht (11) und die zweite Ansicht (12) mittels einer einzigen Kamera (2) erfasst werden.

4. Verfahren nach einem der vorhergehenden Ansprüche, **dadurch gekennzeichnet, dass** eine Annäherung des Fahrzeugs (8) an den Anhänger (7) automatisiert erfolgt.

5. Verfahren nach einem der vorhergehenden Ansprüche, **dadurch gekennzeichnet, dass** eine schnelle und/oder ruckartige Bewegung des Fahrzeugs durch einen Eingriff in ein Motorsteuergerät (9) des Fahrzeugs verhindert wird.

6. Steuergerät (1) zur Unterstützung eines Ankuppelns einer Deichsel (6) eines Anhängers (7) an eine Anhängerkupplung (5) eines Fahrzeug (8), umfassend
- eine Ausgabeeinheit (17), weiche ausgelegt ist, eine erste rückwärtige Ansicht (11) eines Gesamtbereichs hinter dem Fahrzeug (8) und eine zweite rückwärtige Ansicht (12) eines Nahbereichs um die Anhängerkupplung (5) am Fahrzeug (8) auszugeben, wobei die erste und zweite Ansicht durch eine Kamera (2) aufnehmbar sind,
- eine Auswerteeinheit (15), welche Signale einer Objekterfassungseinrichtung (3), welche einen Bereich hinter dem Fahrzeug (8) überwacht, auswertet, um einen Abstand zwischen der Deichsel (6) und der Anhängerkupplung (5) zu bestimmen, und
- eine Umstelleinheit (16) zum Umstellen der durch die Ausgabeeinheit (17) ausgegebenen Ansicht derart, dass die zweite rückwärtige Ansicht (12) des Nahbereichs der Anhängerkupplung (5) ausgegeben wird, wenn ein Abstand zwischen der Deichsel (6) und der Anhängerkupplung (5) kleiner als ein vorbestimmter Abstand (A) ist,
**dadurch gekennzeichnet,**
- **dass** der vorbestimmte Abstand (A) derart gewählt ist, dass die Umschaltung von der ersten Ansicht (11) zur zweiten Ansicht (12) erst dann erfolgt, wenn in der zweiten Ansicht (12) auch eine Deichsel (6) des Anhängers (7) hinter dem Fahrzeug erfasst wird, und
- wobei die Objekterfassungseinrichtung (3) den Abstand zwischen der Deichsel (6) und der Anhängerkupplung (5) mittels Ultraschall erfasst sowie mittels eines aufgenommenen Ultraschallmusters die Deichsel (6) erkennt.

## Claims

1. Method for assisting a procedure of coupling a tow bar (6) of the trailer (7) to a trailer coupling (5) of a vehicle (8) by means of a camera (2) which captures a total area to the rear of the vehicle (8) in a first view (11) and captures a close-range area around the trailer coupling (5) of the vehicle in a second view (12),
- wherein the first view (11) of the total area to the rear is displayed as long as a distance between the tow bar (6) and the trailer coupling (5) is greater than a predetermined distance (A), and
- wherein the second view of the close-range area of the trailer coupling (5) is displayed if a distance between the tow bar (6) and the trailer coupling (5) is shorter than the predetermined distance (A),
**characterized**
- **in that** the predetermined distance (A) is selected in such a way that the switching from the first view (11) to the second view (12) does not take place until the tow bar (6) of the trailer (7) is also captured behind the vehicle in the second view (12),
- wherein an object-capturing device (3) captures the distance between the tow bar (6) and the trailer coupling (5) by means of ultrasound and identifies the tow bar (6) by means of a recorded ultrasound pattern.

2. Method according to Claim 1, **characterized in that** the method is not carried out until after activation by the driver, in particular by means of a switch (10) or the like.

3. Method according to either of the preceding claims, **characterized in that** the first view (11) and the second view (12) are captured by means of a single camera (2).

4. Method according to one of the preceding claims, **characterized in that** the vehicle (8) approaches the trailer (7) in an automated fashion.

5. Method according to one of the preceding claims, **characterized in that** fast and/or jerky movement of the vehicle are prevented by intervention in an engine control device (9) of the vehicle.

6. Control device (1) for assisting coupling of a tow bar (6) of a trailer (7) to a trailer coupling (5) of a vehicle (8), comprising
- an output unit (17) which is configured to output a first view (11) of a total area to the rear of the vehicle (8) and a second view (12) of a close-range area around the trailer coupling (5) on the vehicle (8), wherein the first and second views can be recorded by means of a camera (2),
- an evaluation unit (15) which evaluates signals of an object-capturing device (3), which object-capturing device (3) monitors an area behind the vehicle (8) in order to determine a distance between the tow bar (6) and the trailer coupling (5), and
- a switching unit (16) for switching the view which is output by the output unit (17) in such a way that the second view (12) of the close-range area to the rear of the trailer coupling (5) is output if a distance between the tow bar (6) and the trailer coupling (5) is shorter than a predetermined distance (A),
**characterized**
- **in that** the predetermined distance (A) is selected in such a way that the switching from the first view (11) to the second view (12) does not take place until a tow bar (6) of the trailer (7) is also captured behind the vehicle in the second view (12), and
- wherein the object-capturing device (3) captures the distance between the tow bar (6) and the trailer coupling (5) by means of ultrasound and identifies the tow bar (6) by means of a recorded ultrasound pattern.

## Revendications

1. Procédé d'assistance d'accouplement d'une barre d'attelage (6) de la remorque (7) à couplage de remorque (5) d'un véhicule (8) au moyen d'une caméra (2) qui détecte dans une première vue (11) une zone totale arrière derrière le véhicule (8) et détecte dans une deuxième vue (12) une zone proche autour du couplage de remorque (5) du véhicule ;
- la première vue (11) de la zone totale arrière étant affichée tant qu'une distance entre la barre d'attelage (6) et le couplage de remorque (5) est supérieure à une distance prédéterminée (A) ; et
- la deuxième vue de la zone proche du couplage de remorque (5) étant affichée lorsqu'une distance entre la barre d'attelage (6) et le couplage de remorque (5) est inférieure à la distance prédéterminée (A) ;
**caractérisé en ce que** :
- la distance prédéterminée (A) est sélectionnée de telle sorte que le basculement de la première vue (11) vers la deuxième vue (12) ne se produit que lorsque dans la deuxième vue (12) la barre d'attelage (6) de la remorque (7) derrière le véhicule est également détectée,
- dans lequel un dispositif de détection d'objet (3) détecte la distance entre la barre d'attelage (6) et le couplage de remorque (5) au moyen d'ultrasons, et identifie la barre d'attelage (6) au moyen d'un profil ultrasonore enregistré.

2. Procédé selon la revendication 1, **caractérisé en ce que** le procédé n'est exécuté qu'après activation par le conducteur, notamment à l'aide d'un commutateur (10) ou de son équivalent.

3. Procédé selon l'une quelconque des revendications précédentes, caractérisé en ce la première vue (11) et la deuxième vue (12) sont détectées au moyen d'une seule caméra (2).

4. Procédé selon l'une quelconque des revendications précédentes, **caractérisé en ce qu'**une approche du véhicule (8) par rapport à la remorque (7) se produit de façon automatisée.

5. Procédé selon l'une quelconque des revendications précédentes, **caractérisé en ce qu'**un mouvement rapide et/ou par à-coups du véhicule est empêché par une intervention dans un appareil de commande de moteur (9) du véhicule.

6. Appareil de commande (1) servant à l'assistance d'accouplement d'une barre d'attelage (6) d'une remorque (7) à un couplage de remorque (5) d'un véhicule (8), comprenant :
- une unité de sortie (17) qui est conçue pour sortir une première vue arrière (11) d'une zone totale derrière le véhicule (8) et une deuxième vue arrière (12) d'une zone proche entourant le couplage de remorque (5) au niveau du véhicule (8), la première et la deuxième vue pouvant être enregistrées par une caméra (2) ;
- une unité d'analyse (15) qui analyse les signaux d'un dispositif de détection d'objet (3) qui surveille une zone derrière le véhicule (8) afin de déterminer une distance entre la barre d'attelage (6) et le couplage de remorque (5) ; et
- une unité d'inversion (16) permettant d'inverser la vue sortie par l'unité de sortie (17) de façon à sortir la deuxième vue arrière (12) de la zone proche du couplage de remorque (5) lorsqu'une distance entre la barre d'attelage (6) et le couplage de remorque (5) est inférieure à une distance prédéterminée (A) ;
**caractérisé en ce que** :
- la distance prédéterminée (A) est sélectionnée de telle sorte que le basculement de la première vue (11) vers la deuxième vue (12) ne se produit que lorsque dans la deuxième vue (12) une barre d'attelage (6) de la remorque (7) derrière le véhicule est également détectée, et
- dans lequel le dispositif de détection d'objet (3) détecte la distance entre la barre d'attelage (6) et le couplage de remorque (5) au moyen d'ultrasons et identifie la barre d'attelage (6) au moyen d'un profil ultrasonore enregistré.
